# EUROPÄISCHE PATENTSCHRIFT

(11) **EP 0 459 431 B1**
(45) Veröffentlichungstag und Bekanntmachung des Hinweises auf die Patenterteilung: **19.10.1994**
(21) Anmeldenummer: 91108759.1
(22) Anmeldetag: 29.05.1991
(51) Int. Cl.: G01B 17/02, G01N 29/00

(54) **Ultraschall-Heissprüfkopf**
Ultrasonic measuring probe for hot environments
Tête de mesure à ultrasons pour milieux chauds

(30) Priorität: 31.05.1990 DE 9006170 U
(43) Veröffentlichungstag der Anmeldung: 04.12.1991
(73) Patentinhaber: Hilgers AG, D-56598 Rheinbrohl (DE)
(72) Erfinder: Bärsch, Wilfried, Dr.-Ing., W-5450 Neuwied 13 (DE); Blasius, Dieter, Dipl.-Ing., W-5060 Bergisch-Gladbach 1 (DE); Kanngiesser, Peter, W-5063 Overath-Steinenbrück (DE); Podgorski, Jan, Dipl.-Ing., W-5060 Bergisch-Gladbach 1 (DE); Matthies, Klaus, Dipl.-Ing., W-1000 Berlin 31 (DE); Mrasek, Heinz, W-1000 Berlin 45 (DE); Beyer, Ralph, W-1000 Berlin 47 (DE)
(74) Vertreter: COHAUSZ HASE DAWIDOWICZ & PARTNER

(56) Entgegenhaltungen:
- DE-A- 3 330 411
- DE-U- 6 944 431
- PATENT ABSTRACTS OF JAPAN, vol. 7, no. 60 (P-182)(1205), 12. März 1983 & JP-A-57 206 857
- PATENT ABSTRACTS OF JAPAN, vol. 7, no. 52 (E-162)(1197), 2. März 1983 & JP-A-57 201 400

## Beschreibung

Die vorliegende Erfindung betrifft einen Ultraschall-Heißprüfkopf zur berührungsfreien Prüfung von Bauteilen in einer heißen Flüssigkeit, insbesondere zur Messung der Wandstärke von Behältern, die flüssiges Zink von ca. 450°C enthalten, mit einem in die Flüssigkeit eintauchbaren Gehäuse und darin schalltechnisch gekoppelt einem Piezoelement, einem Dämpfungskörper und einer an die Flüssigkeit angrenzenden Membrane.

In der Zeitschrift METALL, 40. Jahrgang, Heft 3; März 1986, Seiten 238 - 243, wird über Untersuchungen zum Problem der Wanddickenmessung an Verzinkungskesseln mit Ultraschall während des Betriebes berichtet. Dabei befindet sich das flüssige Zink jahrelang bei Temperaturen von ca. 450 - 460°C in Wannen ("Verzinkungskesseln") aus ferritischen Werkstoffen, deren Wanddicken bis zu 50 mm betragen. Durch die auf Diffusion beruhende Bildung einer Fe-Zn-Legierung ("Hartzinkschicht") nimmt die tragende Kesselwanddicke ab. Der Abtrag geschieht sowohl gleichmäßig als auch örtlich bevorzugt durch erhöhte Reaktionsgeschwindigkeit infolge Überhitzung, durch Wirbelbildungen in der Schmelze und an Schweißnähten. Daher ist es notwendig, die Wanddicke der Wanne zu kontrollieren. Eine zerstörungsfreie Wanddickenmessung von außen - z.B. mit Ultraschall - ist wegen der Ummauerung der Wanne nur punktuell durch Klappen im Mauerwerk möglich. Zur flächendeckenden Ultraschallmessung wird die Wanne leergepumpt, damit in erkaltetem Zustand die Wanddicke von innen gemessen werden kann. Dies kann aus Kostengründen nur in recht großen Zeitabständen (ca. 1 bis 2 Jahre) geschehen. Um diesen Aufwand zu vermeiden, wird versucht, die Wanddicke während des Betriebes aus dem flüssigen Zink heraus zu messen. In der genannten Zeitschrift wird ein außerhalb der Zinkschmelze angeordneter, gekühlter Prüfkopf beschrieben, der mit einer langen Vorlaufstrecke aus Edelstahl, die eine 45°-Umlenkfläche hat, Ultraschallimpulse durch das flüssige Metall hindurch auf einen Probekörper übeträgt und dessen Echo empfängt. Die Versuche zeigten, daß mit Hilfe dieser Vorlaufstrecke aus aus tenitischem Stahl die Schalleinleitung in das flüssige Zink möglich ist. In der komplex aufgebauten Fe-Zn-Legierung (Hartzinkschicht) bilden sich jedoch Stengelkristalle aus, die neben der Streubung des Ultraschalls zu Ablenkung und Verzerrung des Ultraschallbündels führen, so daß die für eine Wanddickenmessung benötigten Echos nicht ohne weiteres von Störechos zu trennen sind oder gar nicht mehr empfangen werden können. Diese Stengelkristalle können in Verbindung mit einer flüssigen Phase als "akustischer Sumpf" wirken. Dies kann die Möglichkeit einer Wanddickenmessung von innen entscheidend beeinträchtigen, wenn nicht mit sehr hohen Schalldrücken gearbeitet werden kann. Hohe Schalldrücke sind aber mit einem außerhalb der Schmelze angeordneten Prüfkopf nicht erreichbar. Ohne weitere Maßnahmen am Ultraschallprüfsystem ist nach damaliger Ansicht vorläufig die Wanddickenmessung an in Betrieb befindlichen Verzinkungskesseln mit Ultraschall als nicht möglich anzusehen.

In einem Bericht der Staatlichen Materialprüfungsanstalt Universität Stuttgart, 12. MPA-Seminar am 09. und 10.10.1986, wird auf den Seiten 21.1 bis 21.25 über Ultraschallprüfung von Komponenten und Anlagen bei Temperaturen bis 250°C berichtet sowie über die Verwendung mehrfacher dünner Schichten auf der Frontseite eines Ultraschall-Wandlers. Dadurch soll die Bandbreite des Ultraschall-Signals zunehmen ohne dabei die Schallenergie zu reduzieren. Mit einem Computer-Programm kann man die Ausbreitung von Ultraschallwellen durch Schichten verschiedener Dicke berechnen. Die beschriebenen Prüfköpfe haben als Vorlaufstrecke zwischen Piezokeramik und Bauteil einen sogenannten Keil. Eine Wellenwiderstandstransformation zwischen Piezokeramik und Keil wird beschrieben und physikalisch/mathematisch begründet. Die Wellenwiderstände der front- wie auch rückseitig angekoppelten Schichten sollen danach nicht zu stark differieren, d.h. daß beide, bezogen auf die Piezokeramik entweder schallweich oder schallhart, aber nicht gemischt auftreten sollten, da dieses zu unsymmetrichen Resonanzkurven und somit zu unsauberen Impulsen führt. Bei der Konstruktion der Prüfköpfe sollen dort alle festen Verbindungen vermieden werden. Piezokeramik und Folien werden auf den Keil gepreßt und im Gehäuse von Stiften gehalten. Als Koppelmittel zwischen Heißprüfkopf und Bauteil werden einige spezielle Ultraschall-Hochtemperatur-Öle und -Fette beschrieben, die aber für den vorliegenden Fall bei 450°C nicht beständig sind. Eine schalltechnisch gute Ankopplung der verschiedenen Schichten ohne Öl oder Fett erfordert aber einen hohen Anpressdruck, der mit den schalltechnisch erwünschten sehr dünnen Schichten auf der Flüssigkeitsseite nicht realisiert werden kann, weil diese ausbeulen oder sogar abreißen.

Aufgabe der vorliegenden Erfindung ist die Angabe eines Ultraschall-Heißprüfkopfs zur berührungsfreien Prüfung von Bauteilen in einer heißen Flüssigkeit, insbesondere zur Messung der Wandstärke von Behältern, die flüssiges Zink von ca. 450°C enthalten, mit einem in die Flüssigkeit eintauchbaren Gehäuse und darin schalltechnisch gekoppelt einem Piezoelement, einem Dämpfungskörper und einer an die Flüssigkeit angrenzenden Membrane. Dieser vollständig in die Flüssigkeit eintauchbare Utraschall-Heißprüfkopf soll ein ausreichend starkes Schallsignal erzeugen und muß ohne Kühlung auskommen, also aus temperaturbeständigen Materialien bestehen.

Zur Lösung dieser Aufgabe wird erfindungsgemäß ein Ultraschall-Heißprüfkopf vorgeschlagen mit einem in die Flüssigkeit eintauchbaren Gehäuse und darin schalltechnisch gekoppelt einem Piezoelement, einem Dämpfungskörper und einer an die Flüssigkeit angrenzenden Membrane und dazwischen mit je einer während der Messung weichen Glasschicht. Mit dieser Glasschicht wird eine ausreichende akustische Kopplung zwischen den genannten Teilen erreicht, wie sie sonst nur bei Ölen oder Fetten bekannt ist, deren Temperaturbeständigkeit allerdings für den vorliegenden Fall nicht ausreicht. Auf diese Weise können alle Teile aus thermisch hochbelastbaren Werkstoffen hergestellt werden. Weiterhin werden sie nur mit mäßiger Kraft aneinandergedrückt, so daß sie keinen besonders hohen mechanischen Belastungen ausgesetzt sind. Daher kann insbesondere die Membrane als Abschluß des Prüfkopfs nach außen so dünnwandig ausgeführt werden, wie es aus schalltechnischen Gründen erwünscht ist. Die verwendeten Glase haben einen Schmelzpunkt, der etwas unter der Betriebstemperatur der Flüssigkeit liegt. Außerdem haben sie im festen Zustand einen thermischen Ausdehnungskoeffizienten, der sich von den angrenzenden Bauteilen nicht wesentlich unterscheidet, so daß sie auch beim Abkühlen Zerstörungen vermeiden. Bisher hat sich ein Glas als zweckmäßig erwiesen, welches Natrium-, Phosphor- und Lithiumoxides enthält. Eine Mischung in Molprozenten von je 25% Na₂O und Li₂O mit 50% P₂O₅ hat sich bewährt. Diese hat einen Schmelzpunkt von etwa 380°C und im festen Zustand einen an die angrenzenden Komponenten angepaßten thermischen Ausdehnungskoeffizienten.

In weiterer Ausgestaltung der Erfindung wird vorgeschlagen, daß zwischen Piezoelement und Dämpfungskörper und/oder Membrane eine dünne, schallharte Schicht, beispielsweise eine Goldfolie, vorhanden ist, die auf ihren beiden Seiten mit der obengenannten, während der Messung weichen Glasschicht versehen ist. Eine solche Kombination aus einer schallharten und einer schallweichen Schicht hat die Funktion eines akustischen Transformators und trägt bei gleichzeitiger Verbesserung des Ultra-Schall-Impulses wesentlich zur angestrebten Verbesserung des Schallsignals bei. Als zweckmäßig erwiesen hat sich eine Goldfolie von 10 um bei Glasschichten von 50 um. Bei Einsatz anderer Metallfolien in Kombination mit Glasschichten müssen die benötigten Dicken entsprechend den Transformationsbedingungen berechnet werden, wie im oben genannten MPA-Seminar beschrieben.

Das Piezoelement kann aus Lithium-Niobat bestehen, das eine hohe Temperaturbeständigkeit aufweist. Allerdings braucht es oberhalb von 300°C eine sauerstoffhaltige Atmosphäre. Daher muß in diesem Fall der Innenraum des Prüfkopfes eine luftdurchlässige Verbindung nach außen haben, beispielsweise über die Kabelführung.

In weiterer Ausgestaltung der Erfindung hat die Membrane in an sich bekannter Weise eine Dicke, die nicht größer als die halbe Wellenlänge der Ultraschall-Prüffrequenz ist. Beispielsweise hat eine Lambda/2-Membrane bei 2 MHz und 450°C eine Dicke von 1,38 mm, was im vorliegenden Fall nur zu verwirklichen ist, wenn mit Hilfe der oben erwähnten Glasschichten eine gute Ankopplung erreicht wird und damit auf hohe Anpreßkräfte verzichtet werden kann.

In weiterer Ausgestaltung der Erfindung wird vorgeschlagen, daß der Dämpfungskörper aus Sintermetall besteht, das zur Glasschicht hin abgedichtet ist. Das Sintermetall besteht beispielsweise aus einem Edelstahl 1.4404 mit einer mittleren Korngröße von 0,05 bis 0,1 mm und einer Pososität von 30 bis 50%. Damit die oben erwähnte weiche Glasschicht nicht in die Poren eindringt, wird das Sintermetall an seiner Oberfläche zur Glasschicht geschliffen, so daß sich die Poren schließen.

Mit einem erfindungsgemäßen Ultraschall-Heißprüfkopf ist es gelungen, aus dem flüssigen Zink heraus ohne Kühlung bei Temperaturen von ca. 450°C die Wanddicke eines Kessels berührungsfrei in Impuls-Echo-Technik zu bestimmen. In einer Aufzeichnung waren alle drei Grenzschichten (Flüssigzink-Hartzinkschicht, Hartzinkschicht-Behälterinnenwand, Behälterrückwand-Luft) eindeutig zu identifizieren.

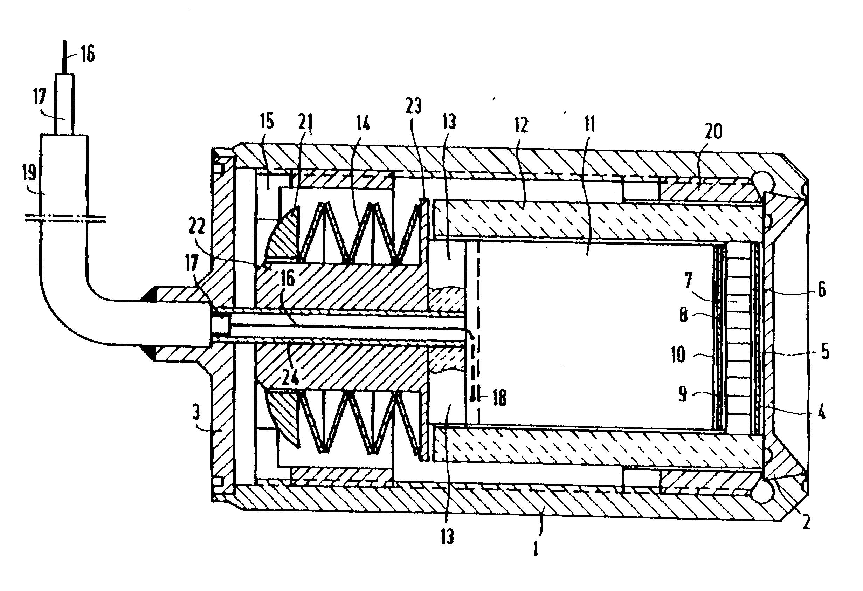

Die Figur zeigt ein Ausführungsbeispiel der Erfindung.

Das zylindrische Gehäuse 1 ist auf der einen Seite mit einer dünnwandigen Membrane 2 aus Edelstahl und auf der anderen Seite mit einem Deckel 3 verschlossen. Eine Goldfolie 4 von 50 µm Dicke ist mit einer Glasschicht 5 an die Membrane 2 und mit einer weiteren Glasschicht 6 an das Piezoelement 7 aus Lithium-Niobat angekoppelt, das wiederum mit einer weiteren Glasschicht 8, einer weiteren Goldfolie 9 und einer Glasschicht 10 an den Dämpfungskörper 11 aus einem Sintermetall (Edelstahl 1.4404 mit einer mittleren Korngröße von 0,05 bis 0,1 mm) angekoppelt ist. Die Glasschichten haben alle eine Dicke von 50 µm. Die Goldfolien 4 und 9 begünstigen das Phasenverhalten und den Durchlässigkeitsfaktor des Schallsignals. Der Dämpfungskörper 11 ist zusammen mit dem Piezoelement 7 von einem zylindrischen Isolierring 12 aus Al₂O₃ umgeben und trägt an seiner Rückseite eine isolierende Scheibe 13, ebenfalls aus Al₂O₃. Diese Teile werden in an sich bekannter Weise mit dem Druckstück 21 und den Tellerfedern 14, die auf dem Druckstempel 22 geführt sind, sowie mit dem einstellbaren Schraubring 15 über die am Druckstempel 22 befestigte Scheibe 23 angedrückt. Das scheibenförmige Piezoelement 7 wird über seine beiden Stirnflächen kapazitiv abgegriffen. Als Elektroden dienen die Innenseite der Membrane 2 und der elektrisch leitende Dämpfungskörper 11. Der koaxiale Signalleiter 16 (mineralisolierter Mantelmeßleiter) wird mit seinem Mantel 17 nach außen geführt und innen durch Laserschweißpunkt 18 mit dem Dämpfungskörper 11 verbunden. Das Schutzrohr 19 ist mit dem Deckel 3 dicht verschweißt und umgibt den Signalleiter 16 und seinen Mantel 17 mit Abstand. Die am Rand konische Membrane 2 wird mit einem Schraubring 20 von innen gegen einen konischen Absatz im Gehäuse 1 gepreßt und dann dicht verschweißt. Der Signalleiter 16 ist innerhalb des Gehäuses 1 von einem Isolierrohr 24 umgeben.

Außer dem bereits angegebenen Dämpfungskörper 11 aus Sintermetall sind auch Dämpfungskörper aus Keramik, z.B. Al₂O₃, oder aus einem in eine Stahlhülse eingebetteten Bündel paralleler Drähte möglich, die an der Vorderseite miteinander dicht verlötet oder verschweißt sind. Der akustische Wellenwiderstand des Dämpfungskörpers sollte in an sich bekannter Weise so gewählt werden, daß er in Verbindung mit der frontseitigen akustischen Koppelschicht zu einem kurzen, also breitbandigen Ultraschall-Impuls führt.

Auf der Membrane 2 wächst bei Betrieb im flüssigen Zink eine sogenannte Hartzinkschicht Fe-Zn auf. Solange ihre Dicke nur 0,52 mm erreicht, was im Hartzink bei einem 2-MHz-Prüfkopf einer Wellenlänge von Lambda/4 entspricht, wird die Transformationseigenschaft dieser Schichtkombination sogar günstig beeinflußt.

Der erfindungsgemäße Heißprüfkopf arbeitet im Impuls-Echo-Betrieb als Sender und als Empfänger.

## Patentansprüche

1. Ultraschall-Heißprüfkopf zur berührungsfreien Prüfung von Bauteilen in einer heißen Flüssigkeit, insbesondere zur Messung der Wandstärke von Behältern, die flüssiges Zink von ca. 450°C enthalten, mit einem in die Flüssigkeit eintauchbaren Gehäuse (1) und darin schalltechnisch gekoppelt einem Piezoelement (7), einem Dämpfungskörper (11) und einer an die Flüssigkeit angrenzenden Membrane (2), wobei zwischen Piezoelement (7), Dämpfungskörper (11) und Membrane (2), je eine während der Messung weiche Glasschicht angeordnet ist.

2. Ultraschall-Heißprüfkopf nach Anspruch 1, **dadurch gekennzeichnet,** daß zwischen Piezoelement (7) und Dampfungskörper (11) und/oder Membrane (2) je eine dünne, schallharte Schicht (9) vorhanden ist, die auf ihren beiden Seiten mit einer während der Messung weichen Glasschicht (5,6,8 oder 10) versehen ist.

3. Ultraschall-Heißprüfkopf nach den Ansprüchen 1 oder 2, **dadurch gekennzeichnet,** daß die Dicke der Membrane (2) nicht größer als die halbe Wellenlänge der Ultraschall-Prüffrequenz ist.

4. Ultraschall-Heißprüfkopf nach den Ansprüchen 1, 2 oder 3, **dadurch gekennzeichnet,** daß der Dämpfungskörper (11) aus Sintermetall besteht, das zur Glasschicht (10) hin abgedichtet ist.

## Claims

1. An ultrasonic measuring probe for hot environments, for the contact-free testing of structural members in a hot liquid, more particularly for measuring the wall thickness of tanks containing liquid zinc at approximately 450°C, having a casing (1) which can be submersed in the liquid and contains sonically coupled a piezo element (7), a damping member (11) and a membrane (2) adjoining the liquid, a glass layer which is soft during the measurement being disposed between the piezo element (7), the damping member (11) and the membrane (2) respectively.

2. An ultrasonic measuring probe for hot environments according to claim 1, characterized in that a thin reverberant layer whose two sides have a glass layer (5, 6, 8, or 10) which is soft during the measurement is provided between the piezo element (7) and the damping member (11) and/or the membrane (2) respectively.

3. An ultrasonic measuring probe for hot environments according to claims 1 or 2, characterized in that the thickness of the membrane (2) is not larger than half the wave length of the ultrasonic testing frequency.

4. An ultrasonic measuring probe for hot environments according to claims 1, 2 or 3, characterized in that the damping member (11) is made of sintered metal which is sealed off in the direction of the glass layer (10).

## Revendications

1. Probe ultrasonique à chaud pour le contrôle sans contact d'éléments constructifs dans un fluide chaud, en particulier pour la mesure de l'épaisseur de paroi de récipients, qui contiennent du zinc liquide à environ 450°C, avec un carter (1) pouvant être plongé dans le fluide et, un piézo-élément (7) accouplé dedans en technique du son, un corps d'amortissement (11) et une membrane (2) adjacente au fluide, une couche de verre qui est molle pendant la mesure étant disposée à chaque fois entre le piézo-élément (7), le corps d'amortissement (11) et la membrane (2).

2. Probe ultrasonique à chaud selon la revendication 1,
caractérisée en ce qu'une couche réverbérante mince (9), qui est munie sur ses deux faces d'une couche de verre (5, 6, 8 ou 10) qui est molle pendant la mesure, est disponible à chaque fois entre le piézo-élément (7) et le corps d'amortissement (11) et/ou la membrane (2).

3. Probe ultrasonique à chaud selon les revendications 1 ou 2,
caractérisée en ce que l'épaisseur de la membrane (2) n'est pas supérieure à la demi-longueur d'onde de la fréquence ultrasonique de contrôle.

4. Probe ultrasonique à chaud selon les revendications 1, 2 ou 3,
caractérisée en ce que le corps d'amortissement (11) est constitué d'un métal fritté qui est rendu étanche en direction de la couche de verre (10).
